# EUROPEAN PATENT SPECIFICATION

(11) **EP 2 444 523 B1**
(45) Date of publication and mention of the grant of the patent: **16.04.2014**
(21) Application number: 10789203.6
(22) Date of filing: 14.06.2010
(51) Int. Cl.: C23C 22/00, H01F 1/16, H01F 1/18, C21D 8/12, C22C 38/00, C22C 38/06, C22C 38/04, C04B 28/34, C09D 7/12, C23C 30/00, C22C 38/02

(54) **ELECTROMAGNETIC STEEL SHEET HAVING INSULATING COATING FILM AND PROCESS FOR PRODUCTION THEREOF**
ELEKTROMAGNETISCHES STAHLBLECH MIT ISOLATIONSBESCHICHTUNGSFILM UND HERSTELLUNGSVERFAHREN DAFÜR
TÔLE D'ACIER ÉLECTROMAGNÉTIQUE AYANT UN FILM DE REVÊTEMENT ISOLANT ET PROCÉDÉ DE FABRICATION DE CETTE DERNIÈRE

(30) Priority: 17.06.2009 JP 2009144759
(43) Date of publication of application: 25.04.2012
(73) Proprietor: Nippon Steel & Sumitomo Metal Corporation, Tokyo 100-8071 (JP)
(72) Inventor: TAKEDA, Kazutoshi, Tokyo 100-8071 (JP); KOSUGE, Kenji, Tokyo 100-8071 (JP); TAKASE, Tatsuya, Tokyo 100-8071 (JP); FUJII, Hiroyasu, Tokyo 100-8071 (JP)
(74) Representative: Hart-Davis, Jason
(86) International application number: PCT/JP2010/003924
(87) International publication number: WO 2010/146821

(56) References cited:
- EP-A1- 0 406 833
- EP-A1- 0 923 088
- EP-A1- 0 926 249
- EP-A1- 2 302 095
- JP-A- 8 333 640
- JP-A- 10 130 859
- DATABASE WPI Week 198910 Thomson Scientific, London, GB; AN 1989-073366 XP002688774, -& JP 1 026438 A (KOBE STEEL LTD) 27 January 1989 (1989-01-27)
- DATABASE WPI Week 199734 Thomson Scientific, London, GB; AN 1997-369962 XP002688775, & JP 9 157861 A (NKK CORP) 17 June 1997 (1997-06-17)
- DATABASE WPI Week 199742 Thomson Scientific, London, GB; AN 1997-454321 XP002688776, & JP 9 209165 A (NIPPON STEEL CORP) 12 August 1997 (1997-08-12)
- DATABASE WPI Week 198615 Thomson Scientific, London, GB; AN 1986-097180 XP002688777, & JP 61 041778 A (NIPPON STEEL CORP) 28 February 1986 (1986-02-28)

## Description

### Technical Field

The present invention relates to an electromagnetic steel sheet used, for example, as a material for an iron core of an electric device, and a method of manufacturing the same. In particular, the present invention relates to an electromagnetic steel sheet with an insulating coating having high interlayer resistance, exhibiting favorable blocking resistance (adhesion resistance) at around room temperatures and not containing chromic acid, and a method of manufacturing the same.

The present application claims priority based on Japanese Patent Application No. 2009-144759 filed in Japan on June 17, 2009.

### Background Art

In recent years, there has been a strong demand for highly efficient, miniaturized electric devices from the viewpoint of global environmental protection, and of economization of power and energy on a worldwide scale. Various measures are necessary to improve the efficiency of the electric devices and miniaturize the electric devices. For example, motors for generators are required to have improved magnetic properties and workability as well as high reliability.

The motor of a generator is significantly important especially for electrification in areas where an electric-power distribution grid is not developed. In particular, the reliability thereof is important while the motor is being miniaturized.

In general, at the time of manufacturing a motor, a hoop-like electromagnetic steel sheet is punched into a predetermined shape, and the punched steel sheets are laminated and adhered to obtain an iron core. A copper wire is wound around teeth or the like, is impregnated with varnish, and is sprayed with powder coating. Thereafter, baking and drying are performed, a terminal for connecting to the copper wire is attached, a flange, a bearing and the like are assembled, and the thus obtained unit is fixed to a case.

An insulating coating having a thickness of 0.5 µm to 2.0 µm is generally applied to a surface of the electromagnetic steel sheet to prevent the occurrence of a short circuit in the iron core. However, once the short circuit occurs, excessive electric current passes through the windings to cause tripping, or raises the temperatures to cause the motor to malfunction, which leads to deterioration in the reliability of the motor. Therefore, the laminated iron core is required to have higher insulating properties.

Conventionally, the insulating properties have been improved by manufacturing the laminated iron core used in the motor for a generator in a manner such that each general electromagnetic steel sheet is subjected to the varnish treatment, or an organic resin is applied in advance to the iron core by 3 µm or more.

However, the application of the varnish treatment to each sheet of electromagnetic steel sheets is not efficient, and increases the cost in terms of industrial aspect. In this respect, by improving the insulating properties of the insulating coating of the electromagnetic steel sheet, the varnish treatment can be omitted.

In addition to a high insulating property, the insulating coating applied to the surface of the electromagnetic steel sheet is required to have various coating properties including workability such as a punching property and a swaging property, and durability such as heat resistance and corrosion resistance.

As a technique relating to the insulating coating of the electromagnetic steel sheet, Patent Document 1 describes a method for forming an insulating coating using a treatment solution formed mainly by bichromate, vinyl acetate, butadiene-styrene copolymer and an emulsion of organic resin such as acrylic resin. Further, Patent Document 2 discloses a technique for forming the insulating coating using a treatment solution in which chromic acid solution, a resin in the form of emulsion and an organic reducing agent are mixed; the chromic acid solution includes an easily soluble aluminum compound, an oxide of bivalent metal, and H₃BO₃; and the chromic acid solution has Me²⁺/Al³⁺ with a molar ratio in the range of 0 to 7.0, (Al³⁺+Me²⁺)/CrO₃ with a molar ratio in the range of 0.2 to 0.5, and H₃BO₃/CrO₃ with a molar ratio in the range of 0.1 to 1.5.

Patent Document 3 discloses a technique for applying roughness to a surface by adding particles of Bakelite or melamine resin having a diameter of about 2 µm or more, to an organic coating or mixed coating of inorganic and organic elements obtained by mixing a phosphoric acid-based inorganic element or a chromic acid-based inorganic element with an organic resin.

In recent years, with the growing awareness of the environmental problems, the insulating coating has been developed, in which the chromic acid solution containing hexavalent chromium is not used. As the technique described above, Patent Document 4 describes a treatment method by which it is possible to, using a treatment solution without a chromium compound, obtain an insulating coating having the same coating properties as the conventional insulating coating and exhibiting excellent sliding property after an annealing process for removing strain, by mixing phosphate and boric acid and/or colloidal silica, each of which has a specific composition, with an emulsion of organic resin having a specific particle diameter in a specific ratio, and baking the thus obtained mixture to a steel sheet.

Patent Document 5 discloses a technique relating to an insulating coating formed by a copolymer of ethylene and unsaturated carboxylic acid, epoxy resin, silane coupler and silica in a specific ratio.

In the field of a surface-processed steel sheet, Patent Document 6, which is listed below, discloses a technique relating to a surface-processing composition of a heat-resistant pre-coated steel sheet, the surface-processing composition being obtained by mixing aluminum flakes, alumina flakes, stainless steel flakes, glass flakes, mica powder, talc powder, plate-like kaolin, barium sulfate flakes and the like with scaly powder to be dispersed on a coating of the steel sheet.

### Related Art Documents

### Patent Documents

Patent Document 1: Japanese Examined Patent Application, Second Publication No. S50-15013
Patent Document 2: Japanese Unexamined Patent Application, First Publication No. H03-36284
Patent Document 3: Japanese Examined Patent Application, Second Publication No. S49-19078
Patent Document 4: Japanese Unexamined Patent Application, First Publication No. H06-330338
Patent Document 5: Japanese Unexamined Patent Application, First Publication No. H09-323066
Patent Document 6: Japanese Unexamined Patent Application, First Publication No. 2004-52000

### Disclosure of the Invention

### Problems to be Solved by the Invention

As motors become highly efficient and miniaturized as described above, there arises a problem of high reliability and excellent coating properties. Therefore, both insulating properties and blocking resistance are required especially for the motor for a generator. More specifically, the electromagnetic steel sheet having the conventional insulating coating has relatively lower insulating properties although exhibiting excellent workability and durability. Therefore, in the case where the coating is thickly applied for securing the insulating property, the electromagnetic steel sheets adhere to each other (blocking). This poses problems of detachment of the coating at the time of stripping off the adhered sheets, and of deterioration of adhesion property.

Further, the coating developed for the surface-processed steel sheet cannot be employed as the insulating coating because it does not have coating properties such as the adhesion property and corrosion resistance required for the insulating coating of the electromagnetic steel sheet.

The present invention has been made in view of the problems described above, and an object of the present invention is to provide an electromagnetic steel sheet having an insulating coating capable of achieving both excellent insulating property and various properties required for the electromagnetic steel sheet such as the adhesion property and blocking resistance, and a method of manufacturing the electromagnetic steel sheet.

### Means for Solving the Problems

The present invention employs the following configurations for solving the problems described above.

(1) A first aspect of the present invention provides an electromagnetic steel sheet having an insulating coating on a surface of the electromagnetic steel sheet, the insulating coating including: a binder solution solid content containing metal phosphate; and a silicate filler having an average particle diameter in a range of 5.0 µm to 8.0 µm and an average specific surface area in a range of 8.0 m²/g to 15.0 m²/g, a content of the silicate filler being 1 to 40 parts by mass relative to 100 parts by mass of the binder solution solid content wherein the silicate filler is a plate-like monocrystal or polycrystal having a layered structure.
(2) In the electromagnetic steel sheet according to (1) above, the binder solution solid content may further contain an organic resin having an average particle diameter in a range of 0.05 µm to 0.50 µm, a content of the organic resin being 1 to 50 parts by mass relative to 100 parts by mass of the metal phosphate, and the organic resin may be one of, a mixture of, or a copolymer of an acrylic-based resin, an epoxy-based resin and a polyester resin.
(3) In the electromagnetic steel sheet according to (1) or (2) above, the electromagnetic steel sheet may be a non-oriented electromagnetic steel sheet.
(4) A coating thickness of the insulating coating may be in a range of 2.5 µm to 12.0 µm, and may be larger than the average particle diameter of the silica or silicate filler.
(5) A second aspect of the present invention provides an electromagnetic steel sheet having an insulating coating on a surface of the electromagnetic steel sheet, the insulating coating including: a binder solution solid content containing colloidal silica and an organic resin having an average particle diameter in a range of 0.05 µm to 0.50 µm, a content of the organic resin being 40 to 400 parts by mass relative to 100 parts by mass of the colloidal silica; a silicate filler having an average particle diameter in a range of 5.0 µm to 8.0 µm and an average specific surface area in a range of 8.0 m²/g to 15.0 m²/g, a content of the silica or silicate filler being 1 to 40 parts by mass relative to 100 parts by mass of the binder solution solid content, in which the organic resin is one of, a mixture of, or a copolymer of an acrylic-based resin, an epoxy-based resin, and a polyester resin wherein the silicate filler is a plate-like monocrystal or polycrystal having a layered structure.
(6) In the electromagnetic steel sheet according to (5) above, the electromagnetic steel sheet may be a non-oriented electromagnetic steel sheet.
(7) In the electromagnetic steel sheet according to (5) above, a coating thickness of the insulating coating may be in a range of 2.5 µm to 12.0 µm, and may be larger than the average particle diameter of the silica or silicate filler.
(8) A third aspect of the present invention provides a method of manufacturing an electromagnetic steel sheet having an insulating coating, the method including: applying, to a surface of the electromagnetic steel sheet, a mixed solution obtained by mixing a binder solution containing a metal phosphate with a silicate filler having an average particle diameter in a range of 5.0 µm to 8.0 µm and an average specific surface area in a range of 8.0 m²/g to 15.0 m²/g, a content of the silica or silicate filler being 1 to 40 parts by mass relative to 100 parts by mass of the binder solution solid content; and baking and drying the electromagnetic steel sheet at an end-point temperature in the range of 250°C to 450°C for 5 to 35 seconds wherein the silicate filler is a plate-like monocrystal or polycrystal having a layered structure.
(9) In the method of manufacturing an electromagnetic steel sheet having an insulating coating according to (8) above, the binder solution may further contain an organic resin having an average particle diameter in a range of 0.05 µm to 0.50 µm, a content of the organic resin being 1 to 50 parts by mass relative to 100 parts by mass of the metal phosphate, and the organic resin may be one of, a mixture of, or a copolymer of an acrylic-based resin, an epoxy-based resin and a polyester resin.
(10) In the method of manufacturing an electromagnetic steel sheet having an insulating coating according to (8) or (9) above, a non-oriented electromagnetic steel sheet may be used as the electromagnetic steel sheet.
(11) In the method of manufacturing an electromagnetic steel sheet having an insulating coating according to (8) or (9) above, a coating thickness of the insulating coating after the baking and drying may be in a range of 2.5 µm to 12 µm, and may be larger than the average particle diameter of the silicate filler.
(12) A fourth aspect of the present invention provides a method of manufacturing an electromagnetic steel sheet having an insulating coating, the method including: applying, to the electromagnetic steel sheet, a mixed solution obtained by mixing a binder solution containing a colloidal silica and an organic resin having an average particle diameter in a range of 0.05 µm to 0.50 µm, a content of the organic resin being 40 to 400 parts by mass relative to 100 parts by mass of the colloidal silica, with a silicate filler having an average particle diameter in a range of 5.0 µm to 8.0 µm and an average specific surface area in a range of 8.0 m²/g to 15.0 m²/g, a content of the silica or silicate filler being 1 to 40 parts by mass relative to 100 parts by mass of the binder solution solid content; and baking and drying the electromagnetic steel sheet at an end-point temperature in the range of 200°C to 400°C for 5 to 25 seconds, in which the organic resin is one of, a mixture of, or a copolymer of an acrylic-based resin, an epoxy-based resin, and a polyester resin wherein the silicate filler is a plate-like monocrystal or polycrystal having a layered structure.
(13) In the method of manufacturing an electromagnetic steel sheet having an insulating coating according to (12) above, a non-oriented electromagnetic steel sheet may be used as the electromagnetic steel sheet.
(14) In the method of manufacturing an electromagnetic steel sheet having an insulating coating according to (15) above, a coating thickness of the insulating coating after the baking and drying may be in a range of 2.5 µm to 12 µm, and may be larger than the average particle diameter of the silicate filler.

### Effects of the Invention

According to the present invention, it is possible to obtain an electromagnetic steel sheet having insulating coating properties necessary for the electromagnetic steel sheet and having favorable properties for use in a generator, by improving the reliability of an insulating coating of the electromagnetic steel sheet.

### Brief Description of the Drawing

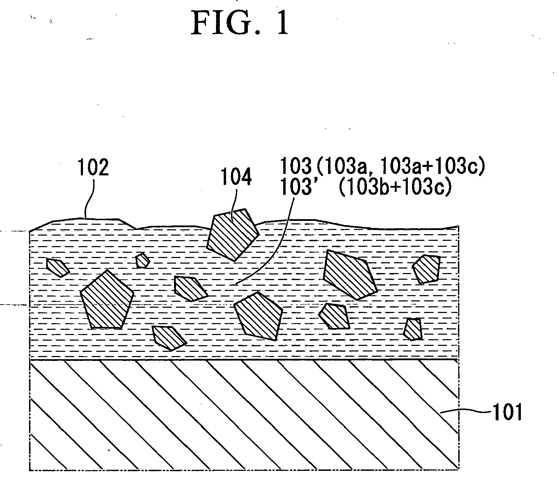

FIG. 1 is a schematic view illustrating an electromagnetic steel sheet having an insulating coating according to an embodiment of the present invention.

### Embodiments of the Invention

Hereinbelow, a preferred embodiment according to the present invention will be described in detail with reference to the drawing.

FIG. 1 illustrates a schematic view of an electromagnetic steel sheet 101 having an insulating coating 102 according to an embodiment of the present invention. The electromagnetic steel sheet 101 used in this embodiment contains Si of 0.1 mass% or more and Al of 0.05 mass% or more. The electrical resistance increases as the amount of Si increases, thereby improving magnetic properties of the electromagnetic steel sheet. However, the increase in the amount of Si causes the increase in the brittleness. Therefore, the content of Si may be in the range of 0.1 mass% to 4.0 mass%. Further, as the amount of Al increases, the magnetic properties of the steel sheet improve whereas the rollability thereof deteriorates. Therefore, the content of Al may be in the range of 0.05 mass% to 3.0 mass%. The electromagnetic steel sheet 101 may be a non-oriented electromagnetic steel sheet.

In addition to Si and Al, the electromagnetic steel sheet 101 may contain Mn in the range of 0.01 mass% to 1.0 mass%. Further, the electromagnetic steel sheet may contain typical elements such as S, N and C, up to less than 100 ppm or less than 20 ppm.

The electromagnetic steel sheet 101 can be obtained, for example, by: heating a slab having the steel components described above to be in the temperature range of 1150°C to 1250°C; hot rolling the heated slab; coiling the rolled slab in a shape of a coil; annealing the sheet to be in the temperature range of 800°C to 1050°C in a state of a hot rolled sheet depending on application; cold rolling the sheet into a thickness in the range of about 0.15 mm to 0.5 mm; and annealing the cold rolled sheet to be in the temperature range of 750°C to 1100°C.

Further, a surface of the electromagnetic steel sheet 101, on which the insulating coating 102 is formed, may be subjected to a given pretreatment such as a degreasing process using, for example, alkali, and an acid cleaning process using, for example, hydrochloric acid, sulfuric acid and phosphoric acid, prior to application of a treatment solution, which will be described later. Alternatively, it may be possible to use a surface in its natural state as being final annealed, without applying the pretreatment described above.

As for a surface roughness of the electromagnetic steel sheet 101, it may be possible to set an average roughness (Ra) on a centerline in a direction of rolling, and in a direction perpendicular to the rolling of rolling to be in the range of 0.3 µm to 1.0 µm, or in the range of 0.35 µm to 0.65 µm. The cost of the cold rolling tends to increase in the case where the Ra is less than 0.3 µm, whereas the magnetic property tends to deteriorate in the case where the Ra exceeds 1.0 µm.

As illustrated in FIG. 1, the insulating coating 102 applied to the electromagnetic steel sheet 101 according to the embodiment of the present invention is formed by using a mixed solution in which a binder 103 having metal phosphate 103a is mixed with a silicate filler 104. In this case, the metal phosphate 103a is a solid content obtained by drying a water solution formed mainly by phosphoric acid and metal ions.

Types of phosphoric acid include, for example, orthophosphoric acid, metaphosphatic acid, and polyphosphoric acid.

Types of metal ions include, for example, Li, Al, Mg, Ca, Sr, and Ti, which are light metals. In the case where Al and Ca are used, uniform coating can be easily formed at a relatively lower temperature. The solution of metal phosphate can be prepared, for example, by mixing orthophosphoric acid with oxide of metal ions, carbonate, and hydroxide.

It may be possible to use the metal phosphate 103a singly or use it by mixing two or more types therewith. Further, the binder 103 may be mixed with additives such as phosphorous acid and boric acid.

As the binder 103, it may be possible to employ a binder 103'containing colloidal silica 103b, in place of the metal phosphate 103a. The colloidal silica 103b may have a particle diameter in the range of 5 nm to 40 nm, and may contain Na in the range of 0.01 mass% to 0.5 mass%, or in the range of 0.01 mass% to 0.3 mass%.

The binder 103, 103' containing the metal phosphate 103a or the colloidal silica 103b may be mixed with an organic resin 103c formed by one of, a mixture of, or a copolymer of acrylic resin, epoxy resin and polyester resin. In particular, in the case of the binder 103' that employs the colloidal silica 103b, the uniform insulating coating 102 can be easily formed by mixing the acrylic resin or epoxy resin with the binder 103'.

The binder 103, 103' containing the metal phosphate 103a or the colloidal silica 103b, and the organic resin 103c having a particle diameter in the range of 0.05 µm to 0.50 µm and formed by one of, a mixture of or a copolymer of acrylic-based resin, epoxy-based resin and polyester resin is used as a base structure of the insulating coating 102 at the time of adding a filler, which will be described later.

It may be possible to employ a commercially available resin emulsion as the organic resin 103C such as the acrylic resin, the epoxy resin, and polyester resin used in this embodiment.

For the acrylic-based resin, it may be possible to use a general monomer such as methyl acrylate, ethyl acrylate, n-butyl acrylate, i-butyl acrylate, n-octyl acrylate, i-octyl acrylate, 2-ethyl hexyl acrylate, n-nonyl acrylate, n-decyl acrylate, and n-dodecyl acrylate.

Further, it may be possible to use a monomer having a functional group such as acrylic acid, methacrylic acid, maleic acid, maleic anhydride, fumaric acid, crotonic acid, and itaconic acid.

Further, it may be possible to use a copolymer formed by monomers having a hydroxy group such as 2-hydroxylethyl (meth)acrylate, 2-hydroxylpropyl (meth)acrylate, 3-hydroxyl butyl (meth)acrylate and 2-hydroxylethyl (meth)allyl ether.

The epoxy-based resin includes, for example, a resin obtained by reacting amine-modified epoxy resin with anhydrous carboxylic acid.

More specifically, it may be possible to use, for example, bisphenol-A diglycidyl ether, a ring-opening adduct of caprolactone of bisphenol-A diglycidyl ether, bisphenol-F diglycidyl ether, bisphenol-S diglycidyl ether, novolak glycidyl ether, and dimer acid glycidyl ether.

As the amine to be modified, it may be possible to use isopropanolamine, monopropanolamine, monobutanolamine, monoethanolamine, diethylenetriamine, ethylenediamine, butalamine, propylamine, isophoronediamine, tetrahydrofurfurylamine, xylenediamine, hexylamine, nonylamine, triethylenetetramine, tetramethylenepentamine, and diaminodiphenylsulfone.

As the anhydrous carboxylic acid, it may be possible to use compounds obtained by reacting succinic anhydride, itaconic anhydride, maleic anhydride, citraconic anhydride, phthalic anhydride, trimellitic anhydride, and so on.

As examples of the polyester resin, it may be possible to use compounds obtained by reacting: dicarboxylic acid such as terephthalic acid, isophthalic acid, orthophthalic acid, naphthalene dicarboxylic acid, biphenyl dicarboxylic acid, succinic acid, adipic acid, sebacic acid, fumaric acid, maleic acid, maleic anhydride, itaconic acid, and citraconic acid; and glycol such as ethylene glycol, 1,2-propylene glycol, 1,3-propanediol, 1,4-butanediol, 1,5-pentanediol, neopentyldiol, 1,6-hexanediol, triethylene glycol, dipropylene glycol, and polyethylene glycol.

Further, it may be possible to graft polymerize acrylic acid, methacrylic acid, maleic acid, fumaric acid, itaconic acid, citraconic acid, methacrylic acid anhydride to the polyester resin described above.

The average particle diameter of the organic resin 103c may be in the range of 0.05 µm to 0.5 µm, preferably, in the range of 0.1 µm to 0.3 µm. It may be possible to use a single type of the above-described organic resins 103c, mixture of two or more types of the above-described organic resins 103c, or copolymer thereof. In the case where the average particle diameter is less than 0.05 µm, the flocculation is likely to occur in the treatment solution, whereby the uniformity of the insulating coating 102 tends to deteriorate. In the case where the diameter exceeds 0.5 µm, the stability tends to deteriorate in the solution.

The ratio of the mixture of the metal phosphate 103a with the above-described organic resins 103c may be 1 to 50 parts by mass of the organic resin relative to 100 parts by mass of the metal phosphate when it is converted into a solid content. In the case where the ratio is less than 1 part by mass, the concentration of the resin is undesirably small. Therefore, flocculation is likely to occur, whereby liquid-stability property tends to deteriorate. In the case where the ratio exceeds 50 parts by mass, the heat resistance tends to reduce.

The ratio of the mixture of the colloidal silica 103b with the above-described organic resins 103c may be 40 to 400 parts by mass of the resin relative to 100 parts by mass of the colloidal silica when it is converted into a solid content. In the case where the ratio is less than 40 parts by mass, the film forming property is undesirably low, and the insulating coating 102 tends to powder. In the case where the ratio exceeds 400 parts by mass, the heat resistance tends to reduce.

Next, the silicate filler 104 used in this embodiment will be described.

The silicate filler 104 used in this embodiment has an average particle diameter in the range of 5.0 µm to 8.0 µm, and an average specific surface area in the range of 8.0 m²/g to 15.0 m²/g.

The average particle diameter is measured on the basis of a Mie scattering theory, and represents the number median diameter in the particle size distribution of samples. Further, the average specific surface area is measured through a gas adsorption method in accordance with JIS K6217.

In the case where the particle diameter of the silicate filler 104 is less than 2.0, the sufficient adhesion property cannot be obtained. In the case where the particle diameter exceeds 15.0 µm, the space factor tends to reduce. Therefore, this embodiment employs the silica or silicate filler 104 having the average particle diameter in the range of 5.0 µm to 8.0 µm.

In the case where the specific surface area of the silicate filler 104 is less than 1.0, the filler is likely to sink or float in the treatment solution, which makes the mixture cumbersome to handle. In the case where the specific surface area exceeds 40.0, the filler tends to flocculate in the treatment solution at the time of drying and baking, resulting in a coating defect. Therefore, this embodiment employs the silicate filler 104 having the average specific surface area in the range of 8.0 m²/g to 15.0 m²/g.

It should be noted that it may be possible to employ these fine particles in a form of powder, or in a form of dispersion solution in which these fine particles are dispersed in water in advance.

The silicate filler includes, for example, peridotite, garnet, kyanite, gehlenite, orthorhombic pyroxene, ferrosilite, monopyroxene clinoaugite, amphibole, kaolin, halloysite, serpentine, montmorillonite, hectorite, pyrophyllite, talc, chlorite, feldspar, zeolite, danburite, and helvite.

According to the invention a silicate filler in which plate-like monocrystals or polycrystals such as hectorite, pyrophyllite, talc and kaolin are formed in a layered structure is used. The silicate may be used singly, or used by mixing two or more elements.

Further, although it may be possible to use the silicate filler 104 by being mixed with other mineral filler, most of the mineral fillers tend to have less adhesion property to the metal phosphate 103a, and hence, it is not preferable to increase the ratio of the mixture. Therefore, in the case of a mixture with the other mineral fillers, the content thereof is set to less than 30 mass% of the additive filler.

In the case where a granular filler is used as the filler, the particle diameter thereof may be in the range of 6.0 µm to 12.0 µm, and the specific surface area thereof may be in the range of 1.0 m²/g to 8.0 m²/g. In the case where the filler is formed into the plate-like filler, the particle diameter thereof may be in the range of 5.0 µm to 8.0 µm, and the specific surface area thereof may be in the range of 8.0 m²/g to 15.0 m²/g.

For the silica or silicate filler 104 used in this embodiment, it may be possible to use a generally commercially available one.

The ratio of the mixture of the silicate filler 104 with the metal phosphate 103a or the binder 103 containing the metal phosphate 103a and the organic resin 103c may be 1 to 40 parts by mass of the silicate filler 104 relative to 100 parts by mass of the solid content of the binder 103. In the case where the ratio is less than 1 part by mass, the blocking resistance tends to deteriorate. In the case where the ratio exceeds 40 parts by mass, the filler fine particles are removed at the time of slitting, and the powdering tends to occur.

The ratio of the mixture of the silicate filler 104 with the binder 103' containing the colloidal silica 103b and the organic resin 103c may be 1 to 40 parts by mass of the silicate filler 104 relative to 100 parts by mass of the solid content of the binder 103'. In the case where the ratio is less than 1 part by mass, the blocking resistance tends the deteriorate. In the case where the ratio exceeds 40 parts by mass, the heat resistance of the coating is undesirably low, and the scratch resistance tends to deteriorate.

In this embodiment, the manner of application of the treatment solution is not limited to applying the treatment solution to a surface of the electromagnetic steel sheet 101, and it may be possible to employ a roll coater. Further, it may be possible to employ a spray type, dip type or other application type. In the case where the roll coater or the dip type is employed, it is possible to avoid clogging.

Further, it is possible to use a general radiant furnace or air-heating furnace for heating the treatment solution to perform drying and baking. Heating may be performed by using an induction heating type or other type that utilizes electricity.

Drying may be performed under conditions in which an end-point temperature is in the range of 250°C to 450°C, and baking time is in the range of 5 seconds to 35 seconds. More preferably, in the case of the metal phosphate 103a, the end-point temperature may be in the range of 300°C to 370°C. Further, in the case where colloidal silica 103b is used, the end-point temperature may be in the range of 200°C to 350°C, and the baking time may be in the range of 5 seconds to 25 seconds. In the case where the baking time is less than 5 seconds, bumping tends to occur. In the case where the baking time exceeds 35 seconds, the cost increases in terms of an industrial aspect. Further, in the case where the colloidal silica 103b is used, the adhesion property deteriorates in the case where the baking time exceeds 25 seconds, and powdering tends to occur. Note that the end-point temperature means a temperature of the surface of the electromagnetic steel sheet 101.

By applying the above-described treatment solution to the surface of the electromagnetic steel sheet 101 and processing the surface through the above-described heating method, the insulating coating 102 having the silicate filler 104 dispersed is formed on the electromagnetic steel sheet 101.

The coating thickness of the insulating coating 102 according to this embodiment is desired to be, for example, in the range of 2.5 µm to 12 µm, preferably, in the range of 5 µm to 8 µm. In the case where the thickness is less than 2.5 µm, there is a possibility that the withstand voltage is low although the interlayer resistance is satisfied. In the case where the thickness exceeds 12 µm, the adhesion property of the coating deteriorates and powdering tends to occur. Note that the coating thickness (after drying) of the insulating coating 102 according to this embodiment includes values of the coating thickness of the binder 103, 103' as well as the height of the filler contained therein.

In this embodiment, it may be possible to apply additives such as a surface-active agent to the above-described insulating coating 102. As the surface-active agent, a non-ionic surface-active agent is desirable, and another brightening agent may be applied.

The silica described above is compatible in the phosphate. It is considered that this is because the silicate filler is reacted with excess phosphoric acid component discharged from the phosphate in the heating process, and they become compatible with each other, thereby improving the adhesion property. With the mineral fillers other than the silicate filler, reactivity with the phosphate cannot be expected. Therefore, those fillers have lower coating properties such as adhesion property and blocking resistance. Details of the reason that the plate-like crystals having the layered structure are particularly preferable are not clearly understood. However, it is assumed that the reason is that the plate-like shape makes the reaction with the phosphate easy, and the layered structure of the filler forms a complicated structural relationship with the base components, whereby the adhesion property significantly improves.

### Example

A treatment solution shown in Table 1 was applied at a drying temperature shown in Table 1 to a surface of a non-oriented electromagnetic steel sheet having a plate thickness of 0.35 mm and a surface roughness of 0.36 µm in Ra (average roughness on a centerline), and containing Si: 2.5%, Al: 0.5% and Mn: 0.05%, and then, was baked.

As the metal phosphate, treatment solutions of the metal phosphate were prepared by mixing and stirring orthophosphoric acid with metal hydroxide such as Mg(OH)₂ and Al(OH)₃, oxide, and carbonate to obtain a solution with 40 mass%. A commercially available colloidal silica having a particle diameter of 15 nm and concentration of 20 mass% was used.

As for the emulsion of the organic resin, the following (A) to (G) were prepared as an emulsion solution of 30 mass%.
(A) Acrylic-based resin 1 obtained by copolymerizing methyl methacrylate of 60 mass%, 2-hydroxyethyl methacrylate of 15 mass% and lauryl methacrylate of 25 mass%.
(B) Acrylic-based resin 2 obtained by mixing fumaric acid of 20 mass%, methyl acrylate of 30 mass%, butyl acrylate of 35 mass% and styrene monomer of 15 mass%.
(C) Acrylic-based resin 3 obtained by copolymerizing methyl acrylate of 40 mass%, styrene monomer of 30 mass% and isobutyl acrylate of 30 mass%.
(D) Carboxyl group-modified epoxy resin 1 obtained by modifying bisphenol-A with triethanolamine, and then reacting maleic anhydride.
(E) Self-emulsifiable epoxy resin 2 obtained by combining phenol novolak-type epoxy resin with ethylene-propylene block copolymer, and adding nonyl phenyl ether ethylene oxide.
(F) Carboxyl group-containing polyester resin obtained by copolymerizing dicarboxy terephthalate of 50 mass% and neopentyl glycol of 30 mass%, and then graft polymerizing fumaric acid of 20 mass%.
(G) Aqueous polyurethane and resol-type phenolic resin water-based emulsion obtained by synthesizing hexamethylene diisocyanate with polyethylene glycol through a known method.

Further, by adding appropriate amounts of viscosity modifier and surface-active agent, a treatment solution having the compositions shown in Table 1 was prepared. Note that the following list shows number-based average particle diameters (JIS Z8826) on the basis of the Mie scattering theory of the respective resins used in the treatment solutions. Further, parts by mass in Table 1 represent values converted into a solid content, relative to 100 parts by mass of metal phosphate or colloidal silica.

Average particle diameter of acrylic-based resin 1: 0.16 µm

Average particle diameter of acrylic-based resin 2: 0.21 µm

Average particle diameter of acrylic-based resin 3: 0.56 µm

Average particle diameter of epoxy-based resin 1: 0.22 µm

Average particle diameter of epoxy-based resin 2: 0.54 µm

Average particle diameter of polyester resin: 0.3 µm

Average particle diameter of emulsion of phenolic resin: 0.65 µm

A predetermined amount, which is shown in Table 2, of silicate filler, carbonate filler, various inorganic mineral-based fillers and organic resin filler described below was added to the binder treatment solutions. The parts by mass in Table 2 are indicated by being converted into a solid content.

Synthetic hectorite (particle diameter: 2.6 µm, specific surface area: 21.9 m²/g)

Kaolin 1 (particle diameter: 5.6 µm, specific surface area: 10.1 m²/g)

Kaolin 2 (particle diameter: 2.1 µm, specific surface area: 37.5 m²/g)

Talc 1 (particle diameter: 4.5 µm, specific surface area: 9.5 m²/g)

Talc 2 (particle diameter: 13.0 µm, specific surface area: 4.5 m²/g)

Talc 3 (particle diameter: 20.0 µm, specific surface area: 0.8 m²/g)

Mica 1 (particle diameter: 10 µm, specific surface area: 3.5 m²/g)

Mica 2 (particle diameter: 15 µm, specific surface area: 42.5 m²/g)

Barium sulfate (particle diameter: 7.0 µm, specific surface area: 34.6 m²/g)

Alumina 1 (particle diameter: 3.9 µm, specific surface area: 5.6 m²/g)

Alumina 2 (particle diameter: 8.0 pm, specific surface area: 2.0 m²/g)

Gibbsite (particle diameter: 2.2 µm, specific surface area: 20.5 m²/g)

Calcium carbonate 1 (particle diameter: 5.2 µm, specific surface area: 7.0 m²/g)

Calcium carbonate 2 (particle diameter: 3.2 µm, specific surface area: 8.0 m²/g)

Bentonite 1 (particle diameter: 2.1 µm, specific surface area: 36.6 m²/g)

Bentonite 2 (particle diameter: 1.3 µm, specific surface area: 80 m²/g)

Silica 1 (particle diameter: 2.5 µm, specific surface area: 13.6 m²/g)

Silica 2 (particle diameter: 6.5 µm, specific surface area: 0.1 m²/g)

Silica 3 (particle diameter: 2.2 µm, specific surface area: 54.0 m²/g)

Mixture 1 of kaolin and talc (particle diameter: 10.6 µm, specific surface area: 38.0 m²/g)

Mixture 2 of kaolin and talc (particle diameter: 8.5 µm, specific surface area: 46.0 m²/g)

Mixture of silica and kaolin (particle diameter: 14 µm, specific surface area: 28.0 m²/g)

Mixture of silica and talc (particle diameter: 16 µm, specific surface area: 1.3 m²/g)

Further, as the organic resin filler, a polyethylene wax having an average particle diameter of 6 µm and a specific surface area of 5.1 m²/g was used.

It should be noted that, at the time of measuring the particle diameters, each powder sample was dispersed in distilled water for around one minute using an ultrasonic cleaner, and the number-based average particle diameters were measured using a commercially available particle-diameter measuring device (LA-950 made by HORIBA, Ltd.) based on the laser diffraction method in accordance with a JIS method (JIS Z8826). The specific surface area was measured through a nitrogen absorption method in accordance with a JIS method (JIS K6217).

Each fine particle was used in experiments as a dispersion solution having a concentration of 40 mass%.

The treatment solution was applied through a roll coater system in a manner such that the amount of compression by rolling was adjusted such that the coating thickness of the binder is 4.0 µm. Drying was performed using a radiant furnace in a manner such that the furnace temperatures were adjusted so as to be able to obtain predetermined heating conditions shown in Table 2. Depending on samples, the end-point temperatures of the sheet and baking time were adjusted such that the temperatures fell within the range of 150°C to 410°C and baking time fell in the range of 5 seconds to 35 seconds. Table 3 shows results of evaluation and measurement of the obtained samples. Note that the surface roughnesses of the obtained samples fell within the range of 0.22 µm to 0.78 µm for Examples and 0.24 µm to 0.88 µm for Comparative Examples.

**Table 1**

| No. | Name of binder solution | Organic resin | Resin (Part by mass) | Other additives |
|---|---|---|---|---|
| 1 | Aluminum phosphate | Acrylic-based resin 1 | 30 | |
| 2 | Aluminum phosphate | Non | - | |
| 3 | Aluminum phosphate + Magnesium phosphate | Acrylic-based resin 2 | 12 | Boric acid: 2 parts by mass |
| 4 | Aluminum phosphate | Epoxy-based resin 1 | 44 | |
| 5 | Aluminum phosphate + Magnesium phosphate | Polyester-based resin | 3 | |
| 6 | Nickel phosphate | Non | - | |
| 7 | Magnesium phosphate | Acrylic-based resin 1 | 12 | |
| 8 | Colloidal silica 1 | Acrylic-based resin 1 | 200 | |
| 9 | Aluminum phosphate | Acrylic-based resin 2 | 0,4 | |
| 10 | Aluminum phosphate | Acrylic-based resin 2 | 63 | |
| 11 | Colloidal silica 1 | Epoxy-based resin 1 | 30 | |
| 12 | Colloidal silica 1 | Epoxy-based resin 1 | 500 | |
| 13 | Magnesium phosphate | Aqueous polyurethane | 30 | |
| 14 | Aluminum phosphate | Epoxy-based resin 2 | 40 | |
| 15 | Aluminum phosphate | Acrylic-based resin 3 | 30 | |
| 16 | Colloidal silica 1 | Phenol resin | 100 | |

**Table 2**

| No. | Binder solution No. | Type of filler | Amount of added filler (Parts by mass) | Heating temperature × time (°C × sec) | Remarks |
|---|---|---|---|---|---|
| 1 | 1 | Synthetic hectorite | 20 | 230°C × 6 | Illustrative Example |
| 2 | 2 | Kaolin 1 | 7 | 260°C × 6 | Example |
| 3 | 2 | Kaolin 2 | 44 | 280°C × 3 | Comparative Example |
| 4 | 1 | Talc 1 | 13 | 280°C × 3 | Illustrative Example |
| 5 | 4 | Talc 2 | 40 | 280°C × 3 | Illustrative Example |
| 6 | 8 | Mica 1 | 16 | 230°C × 12 | Illustrative Example |
| 7 | 9 | Bentonite 1 | 10 | 230°C × 6 | Comparative Example |
| 8 | 5 | Silica 1. | 10 | 230°C × 6 | Illustrative Example |
| 9 | 6 | Mixture 1 of kaolin and talc | 10 | 200°C × 6 | Illustrative Example |
| 10 | 7 | Mixture of silica and kaolin | 20 | 160°C × 15 | Illustrative Example |
| 11 | 3 | Kaolin 1 | 0,5 | 300°C × 6 | Comparative Example |
| 12 | 4 | Kaolin 1 | 55 | 230°C × 12 | Comparative Example |
| 13 | 1 | Talc 3 | 16 | 230°C × 12 | Comparative Example |
| 14 | 2 | Mica 2 | 10 | 230°C × 6 | Comparative Example |
| 15 | 2 | Silica 2 | 10 | 230°C × 6 | Comparative Example |
| 16 | 1 | Silica 3 | 30 | 200°C × 6 | Comparative Example |
| 17 | 1 | Bentonite 2 | 20 | 160°C × 15 | Comparative Example |
| 18 | 1 | Mixture 2 of kaolin and talc | 33 | 300°C × 2 | Comparative Example |
| 19 | 1 | Mixture of silica and talc | 20 | 230°C × 6 | Comparative Example |
| 20 | 10 | Kaolin 1 | 15 | 280°C × 3 | Comparative Example |
| 21 | 11 | Kaolin 1 | 15 | 280°C × 3 | Comparative Example |
| 22 | 12 | Kaolin 1 | 10 | 280°C × 3 | Comparative Example |
| 23 | 15 | Kaolin 2 | 15 | 230°C × 12 | Comparative Example |
| 24 | 9 | Talc 1 | 15 | 230°C × 6 | Comparative Example |
| 25 | 13 | Talc 1 | 10 | 230°C × 6 | Comparative Example |
| 26 | 14 | Mixture 1 of kaolin and talc | 10 | 230°C × 6 | Comparative Example |
| 27 | 16 | Mixture 1 of kaolin and talc | 10 | 230°C × 6 | Comparative Example |
| 28 | 2 | Barium sulfate | 30 | 280°C × 3 | Comparative Example |
| 29 | 3 | Alumina 1 | 20 | 260°C × 6 | Comparative Example |
| 30 | 4 | Alumina 2 | 30 | 280°C × 4 | Comparative Example |
| 31 | 4 | Gibbsite | 20 | 260°C × 6 | Comparative Example |
| 32 | 2 | Calcium carbonate 1 | 10 | 230°C × 6 | Comparative Example |
| 33 | 2 | Calcium carbonate 2 | 30 | 260°C × 6 | Comparative Example |
| 34 | 2 | Polyethylene wax | 20 | 230°C × 6 | Comparative Example |

With reference to the following criteria, the insulating properties were determined on the basis of the interlayer resistance measured according to a method specified by JIS (JIS C2550). Samples evaluated as Good and Very Good were determined to be acceptable.

Less than 5 Ω·cm²/sheet: Bad

5 to 10 Ω·cm²/sheet: Fair

10 to 50 Ω·cm²/sheet: Good

50 Ω·cm²/sheet or more: Very Good

The adhesive properties were evaluated such that: samples of the steel sheets that have been subjected to annealing (annealing temperature of 750°C for two hours in a nitrogen atmosphere) for the purpose of removing strain and have adhesive tapes were wound around metal bars having diameters of 10 mm, 20 mm, and 30 mm; the adhesive tapes were removed; and marks generated at the time of removing the adhesive tapes were examined. The samples from which the adhesive tapes did not fall off through bending with 10 mmϕ were evaluated as 10 mmϕ OK; the samples from which the adhesive tapes did not fall off through bending with 20 mmϕ were evaluated as 20 mmϕ OK; the samples from which the adhesive tapes did not fall off through bending with 30 mmϕ were evaluated as 30 mmϕ OK; and the samples from which the adhesive tapes fell off were evaluated as Not Good.

The corrosion resistance was evaluated by performing a neutral salt spray test in accordance with a JIS method (JIS Z2371), and samples after a lapse of seven hours were used for evaluation on a scale of 10. The samples having "7" or more on the scale of 10 were evaluated as being acceptable.

10: Rust does not occur
9: Very small amount of rust occurs (area ratio of 0.1% or lower)
8: Ratio of area where rust occurs = over 0.1 % to 0.25%
7: Ratio of area where rust occurs = over 0.25% to 0.50%
6: Ratio of area where rust occurs = over 0.50% to 1%
5: Ratio of area where rust occurs = over 1% to 2.5%
4: Ratio of area where rust occurs = over 2.5% to 5%
3: Ratio of area where rust occurs = over 5% to 10%
2: Ratio of area where rust occurs = over 10% to 25%
1: Ratio of area where rust occurs = over 25% to 50%

In terms of external appearance, a sample having a lustrous, smooth, uniform appearance was evaluated as "5"; a sample having a lustrous appearance but slightly poor uniformity was evaluated as "4"; a sample having a slightly lustrous, smooth appearance but poor uniformity was evaluated as "3"; a sample having no luster, slightly poor smoothness, and poor uniformity was evaluated as "2"; and a sample having poor luster, poor smoothness and poor uniformity was evaluated as "1". The sample evaluated as "4" or more is acceptable.

The heat resistance was evaluated by annealing the sample (annealing temperature of 750°C for two hours in the nitrogen atmosphere) for the purpose of removing the strain; then, rubbing the surface of the steel sheet using a 2 mm x 30 mm gauze with a load of 100 gf (around 0.98 N); and examining the peeling state of the insulating coating. The sample without peeling was evaluated as "5"; the sample from which the coating is slightly peeled was evaluated as "4"; the sample from which the coating is clearly peeled was evaluated as "3"; the sample from which the coating is greatly peeled was evaluated as "2"; and the sample from which the coating is peeled without being rubbed with the gauze was evaluated as "1".

The sample evaluated as "4" or more is acceptable.

The blocking resistance was evaluated such that: after the samples were cut off into a size of 3 cm x 4 cm, the cut samples were layered such that a long side and a short side were alternately overlaid; pressure of 40 kgf/cm² (around 392 N/cm²) was applied to the layered samples; the layered samples were placed in a thermostatic chamber at a temperature of 50°C and humidity of 90% for seven days; and forces required for pulling and detaching the samples in a vertical direction were measured. The samples in which the forces required for pulling and detaching are less than 150 gf/cm² (around 1.47 N/cm²) were acceptable.

**Table 3**

| No. | Insulating property | Adhesion property | Corrosion resistance | Appearance | Heat resistance | Adhesion resistance gf/cm² | Remarks |
|---|---|---|---|---|---|---|---|
| 1 | Very Good | 20mmϕ OK | 10 | 5 | 5 | 50 | Illustrative Example |
| 2 | Very Good | 20 mmϕ OK | 10 | 5 | 5 | 40 | Example |
| 3 | Very Good | 20 mmϕ OK | 9 | 5 | 5 | 0 | Comparative Example |
| 4 | Very Good | 10 mmϕ OK | 10 | 5 | 4 | 20 | Illustrative Example |
| 5 | Very Good | 20 mmϕ OK | 10 | 4 | 5 | 0 | Illustrative Example |
| 6 | Good | 20 mmϕ OK | 7 | 5 | 5 | 10 | Illustrative Example |
| 7 | Very Good | 20 mmϕ OK | 9 | 4 | 4 | 20 | Illustrative Example |
| 8 | Good | 20 mmϕ OK | 7 | 5 | 4 | 0 | Illustrative Example |
| 9 | Very Good | 20 mmϕ OK | 9 | 4 | 5 | 20 | Illustrative Example |
| 10 | Very Good | 20 mmϕ OK | 7 | 4 | 5 | 40 | Illustrative Example |
| 11 | Fair | 20 mmϕ OK | 7 | 1 | 4 | 40 | Comparative Example |
| 12 | Very Good | 30 mmϕ Not Good | 5 | 3 | 1 | 300 | Comparative Example |
| 13 | Good | 30 mmϕ Not Good | 7 | 3 | 1 | 160 | Comparative Example |
| 14 | Very Good | 30 mmϕ Not Good | 4 | 3 | 1 | 200 | Comparative Example |
| 15 | Very Good | 30 mmϕ Not Good | 2 | 3 | 4 | 240 | Comparative Example |
| 16 | Good | 30 mmϕ OK | 2 | 3 | 4 | 500 | Comparative Example |
| 17 | Good | 30 mmϕ OK | 2 | 3 | 2 | 300 | Comparative Example |
| 18 | Good | 30 mmϕ Not Good | 3 | 4 | 3 | 150 | Comparative Example |
| 19 | Good | 30 mmϕ OK | 5 | 3 | 2 | 150 | Comparative Example |
| 20 | Good | 20 mmϕ OK | 7 | 2 | 1 | 600 | Comparative Example |
| 21 | Very Good | 30 mmϕ Not Good | 4 | 5 | 5 | 550 | Comparative Example |
| 22 | Good | 20 mmϕ OK | 7 | 4 | 2 | 470 | Comparative Example |
| 23 | Very Good | 30 mmϕ OK | 8 | 4 | 5 | 300 | Comparative Example |
| 24 | Very Good | 30 mmϕ OK | 9 | 5 | 5 | 420 | Comparative Example |
| 25 | Good | 30 mmϕ Not Good | 8 | 4 | 1 | 260 | Comparative Example |
| 26 | Good | 30 mmϕ OK | 5 | 5 | 4 | 300 | Comparative Example |
| 27 | Fair | 30 mmϕ Not Good | 4 | 4 | 1 | 320 | Comparative Example |
| 28 | Good | 30 mmϕ Not Good | 6 | 4 | 1 | 260 | Comparative Example |
| 29 | Good | 30 mmϕ OK | 7 | 5 | 4 | 300 | Comparative Example |
| 30 | Good | 30 mmϕ Not Good | 6 | 4 | 2 | 260 | Comparative Example |
| 31 | Good | 30 mmϕ OK | 5 | 3 | 4 | 260 | Comparative Example |
| 32 | Good | 20 mmϕ OK | 4 | 4 | 1 | 270 | Comparative Example |
| 33 | Good | 30 mmϕ Not Good | 5 | 4 | 3 | 190 | Comparative Example |
| 34 | Good | 30 mmϕ OK | 5 | 3 | 4 | 410 | Comparative Example |

From Table 3, effects obtained by the present invention can be clearly confirmed.

According to Table 3, it can be understood that the samples corresponding to Examples of the present invention have favorable insulating property, adhesion property, corrosion resistance, heat resistance, blocking resistance, and favorable external appearance. As for the samples corresponding to Comparative Examples, there was no sample in which all the properties of insulating property, adhesion property, corrosion resistance, heat resistance, blocking resistance, and external appearance are favorable.

As can be clearly understood from Examples described above, according to the electromagnetic steel sheet of this embodiment of the present invention, it is possible to provide an electromagnetic steel sheet having excellent properties such as the insulating property, adhesion property and blocking resistance, which are required for the electromagnetic steel sheet used mainly in the motor for generators.

As described above, by enhancing the dispersion property of the filler with respect to the binder, it is possible to improve the properties of the electromagnetic steel sheet such as the insulating property, adhesion property and blocking resistance, which are largely affected by the dispersion state of the filler.

These are detailed descriptions of the preferred embodiment of the present invention. However, the present invention is not limited to the examples described above.

### Industrial Applicability

According to the present invention, it is possible to provide an electromagnetic steel sheet having the insulating coating capable of achieving both excellent insulating property and various properties required for the electromagnetic steel sheet such as the adhesion property and blocking resistance, and a method of manufacturing the electromagnetic steel sheet. Therefore, the present invention has sufficient industrial applicability.

### Reference Signs List

- 101: Electromagnetic steel sheet
- 102: Insulating coating
- 103, 103': Binder
- 103a: Metal phosphate
- 103b: Colloidal silica
- 103c: Organic resin
- 104: silicate filler

## Claims

1. An electromagnetic steel sheet having an insulating coating on a surface of the electromagnetic steel sheet, the insulating coating including:
a binder solid content containing metal phosphate; and
a silicate filler having an average particle diameter measured by a laser diffraction method in accordance with JIS Z8826 in a range of 5.0 µm to 8.0 µm and an average specific surface area measured by a nitrogen absorption method in accordance with JIS K6217 in a range of 8.0 m²/g to 15.0 m²/g, a content of the silicate filler being 1 to 40 parts by mass relative to 100 parts by mass of the binder solid content,
wherein the silicate filler is a plate-like monocrystal or polycrystal having a layered structure.

2. The electromagnetic steel sheet according to Claim 1, wherein:
the binder solid content further contains an organic resin having an average particle diameter measured by a laser diffraction method in accordance with JIS Z8826 in a range of 0.05 µm to 0.50 µm, a content of the organic resin being 1 to 50 parts by mass relative to 100 parts by mass of the metal phosphate; and
the organic resin is one of, a mixture of, or a copolymer of an acrylic-based resin, an epoxy-based resin, and a polyester resin.

3. The electromagnetic steel sheet according to Claim 1 or 2, wherein
the electromagnetic steel sheet is a non-oriented electromagnetic steel sheet.

4. The electromagnetic steel sheet according to Claim 1 or 2, wherein
a coating thickness of the insulating coating is in a range of 2.5 µm to 12 µm, and is larger than the average particle diameter of the silicate filler.

5. An electromagnetic steel sheet having an insulating coating on a surface of the electromagnetic steel sheet, the insulating coating including:
a binder solid content containing colloidal silica, and an organic resin having an average particle diameter measured by a laser diffraction method in accordance with JIS Z8826 in a range of 0.05 µm to 0.50 µm, a content of the organic resin being 40 to 400 parts by mass relative to 100 parts by mass of the colloidal silica; and
a silicate filler having an average particle diameter measured by a laser diffraction method in accordance with JIS Z8826 in a range of 5.0 µm to 8.0 µm and an average specific surface area measured by a nitrogen absorption method in accordance with JIS K6217 in a range of 8.0 m²/g to 15.0 m²/g, a content of the silicate filler being 1 to 40 parts by mass relative to 100 parts by mass of the binder solid content, wherein
the organic resin is one of, a mixture of, or a copolymer of an acrylic-based resin, an epoxy-based resin, and a polyester resin, and
the silicate filler is a plate-like monocrystal or polycrystal having a layered structure.

6. The electromagnetic steel sheet according to Claim 5, wherein
the electromagnetic steel sheet is a non-oriented electromagnetic steel sheet.

7. The electromagnetic steel sheet according to Claim 5, wherein
a coating thickness of the insulating coating is in a range of 2.5 µm to 12 µm, and is larger than the average particle diameter of the silicate filler.

8. A method of manufacturing an electromagnetic steel sheet having an insulating coating, the method comprising:
applying, to a surface of the electromagnetic steel sheet, a mixed solution obtained by mixing a binder solution containing a metal phosphate with a silicate filler having an average particle diameter measured by a laser diffraction method in accordance with JIS Z8826 in a range of 5.0 µm to 8.0 µm and an average specific surface area measured by a nitrogen absorption method in accordance with JIS K6217 in a range of 8.0 m²/g to 15.0 m²/g, a content of the silicate filler being 1 to 40 parts by mass relative to 100 parts by mass of the binder solid content; and
baking and drying the electromagnetic steel sheet at an end-point temperature in the range of 250°C to 450°C for 5 to 35 seconds
wherein the silicate filler is a plate-like monocrystal or polycrystal having a layered structure.

9. The method of manufacturing an electromagnetic steel sheet having an insulating coating according to Claim 8, wherein:
the binder solution further contains an organic resin having an average particle diameter measured by a laser diffraction method in accordance with JIS Z8826 in a range of 0.05 µm to 0.50 µm, a content of the organic resin being 1 to 50 parts by mass relative to 100 parts by mass of the metal phosphate; and
the organic resin is one of, a mixture of, or a copolymer of an acrylic-based resin, an epoxy-based resin, and a polyester resin.

10. The method of manufacturing an electromagnetic steel sheet according to Claim 8 or 9, wherein
a non-oriented electromagnetic steel sheet is used as the electromagnetic steel sheet.

11. The method of manufacturing an electromagnetic steel sheet according to Claim 8 or 9, wherein
a coating thickness of the insulating coating after the baking and drying is in a range of 2.5 µm to 12 µm, and is larger than the average particle diameter of the silicate filler.

12. A method of manufacturing an electromagnetic steel sheet having an insulating coating, the method comprising:
applying, to the electromagnetic steel sheet, a mixed solution obtained by mixing a binder solution containing a colloidal silica and an organic resin having an average particle diameter measured by a laser diffraction method in accordance with JIS Z8826 in a range of 0.05 µm to 0.50 µm, a content of the organic resin being 40 to 400 parts by mass relative to 100 parts by mass of the colloidal silica, with a silicate filler having an average particle diameter measured by a laser diffraction method in accordance with JIS Z8826 in a range of 5.0 µm to 8.0 µm and an average specific surface area measured by a nitrogen absorption method in accordance with JIS K6217 in a range of 8.0 m²/g to 15.0 m²/g, a content of the silicate filler being 1 to 40 parts by mass relative to 100 parts by mass of the binder solid content; and
baking and drying the electromagnetic steel sheet at an end-point temperature in the range of 200°C to 400°C for 5 to 25 seconds, wherein
the organic resin is one of, a mixture of, or a copolymer of an acrylic-based resin, an epoxy-based resin, and a polyester resin, and
the silicate filler is a plate-like monocrystal or polycrystal having a layered structure.

13. The method of manufacturing an electromagnetic steel sheet according to Claim 12, wherein
a non-oriented electromagnetic steel sheet is used as the electromagnetic steel sheet.

14. The method of manufacturing an electromagnetic steel sheet according to Claim 12, wherein
a coating thickness of the insulating coating after the baking and drying is in a range of 2.5 µm to 12 µm, and is larger than the average particle diameter of the silicate fitter.

## Patentansprüche

1. Elektromagnetisches Stahlblech mit einer Isolierbeschichtung auf einer Oberfläche des elektromagnetischen Stahlblechs, wobei die Isolierbeschichtung umfasst:
einen metallphosphathaltigen Bindemittelfestkörpergehalt und
einen Silikatfüllstoff mit einem durchschnittlichen Partikeldurchmesser, der durch ein Laserbeugungsverfahren in Übereinstimmung mit JIS Z8826 gemessen wird, in einem Bereich von 5,0 µm bis 8,0 µm und einem durchschnittlichen spezifischen Oberflächenbereich, der durch ein Stickstoffabsorptionsverfahren in Übereinstimmung mit JIS K6217 gemessen wird, in einem Bereich von 8,0 m²/g bis 15,0 m²/g, wobei ein Gehalt des Silikatfüllstoffs 1 bis 40 Massenanteile in Bezug auf 100 Massenanteile des Bindemittelfestkörpergehalts beträgt,
wobei der Silikatfüllstoff ein plattenförmiger Monokristall oder Polykristall mit einer geschichteten Struktur ist.

2. Elektromagnetisches Stahlblech nach Anspruch 1, wobei
der Bindemittelfestkörpergehalt ferner ein organisches Harz mit einem durchschnittlichen Partikeldurchmesser, der durch ein Laserbeugungsverfahren in Übereinstimmung mit JIS Z8826 gemessen wird, in einem Bereich von 0,05 µm bis 0,50 µm umfasst, wobei ein Gehalt des organischen Harzes 1 bis 50 Massenanteile in Bezug auf 100 Massenanteile des Metallphosphates beträgt, und
das organische Harz eines von einer Mischung oder einem Copolymer aus einem acrylbasierten Harz, einem epoxidbasierten Harz und einem Polyesterharz ist.

3. Elektromagnetisches Stahlblech nach Anspruch 1 oder 2, wobei
das elektromagnetische Stahlblech ein nicht ausgerichtetes elektromagnetisches Stahlblech ist.

4. Elektromagnetisches Stahlblech nach Anspruch 1 oder 2, wobei
eine Beschichtungsdicke der Isolierbeschichtung in einem Bereich von 2,5 µm bis 12 µm liegt und größer als der durchschnittliche Teilchendurchmesser des Silikatfüllstoffes ist.

5. Elektromagnetisches Stahlblech mit einer Isolierbeschichtung auf einer Oberfläche des elektromagnetischen Stahlblechs, wobei die Isolierbeschichtung umfasst:
einen Bindemittelfestkörpergehalt, der kolloidales Silikat und ein organisches Harz mit einem durchschnittlichen Partikeldurchmesser, der durch ein Laserbeugungsverfahren in Übereinstimmung mit JIS Z8826 gemessen wird, in einem Bereich von 0,05 µm bis 0,50 µm umfasst, wobei ein Gehalt des organischen Harzes 40 bis 400 Massenanteile in Bezug auf 100 Massenanteile des kolloidalen Silikates beträgt, und
einen Silikatfüllstoff mit einem durchschnittlichen Partikeldurchmesser, der durch ein Laserbeugungsverfahren in Übereinstimmung mit JIS Z8826 gemessen wird, in einem Bereich von 5,0 µm bis 8,0 µm und einem durchschnittlichen spezifischen Oberflächenbereich, der durch ein Stickstoffabsorptionsverfahren in Übereinstimmung mit JIS K617 gemessen wird, in einem Bereich von 8,0 m²/g bis 15,0 m²/g, wobei ein Gehalt des Silikatfüllstofifs 1 bis 40 Massenanteile in Bezug auf 100 Massenanteile des Bindemittelfestkörpergehalts beträgt, wobei
das organische Harz eines von einer Mischung oder einem Copolymer aus einem acrylbasierten Harz, einem epoxidbasierten Harz und einem Polyesterharz ist,
wobei der Silikatfüllstoff ein plattenförmiger Monokristall oder Polykristall mit einer geschichteten Struktur ist.

6. Elektromagnetisches Stahlblech nach Anspruch 5, wobei
das elektromagnetische Stahlblech ein nicht ausgerichtetes elektromagnetisches Stahlblech ist.

7. Elektromagnetisches Stahlblech nach Anspruch 5, wobei
eine Beschichtungsdicke der lsolierbeschichtung in einem Bereich von 2,5 µm bis 12 µm liegt und größer als der durchschnittliche Teilchendurchmesser des Silikatfüllstoffes ist.

8. Verfahren zum Herstellen eines elektromagnetischen Stahlblechs mit einer Isolierbeschichtung, wobei das Verfahren umfasst:
Auftragen einer gemischten Lösung, die durch Mischen einer metallphosphathaltigen Bindemittellösung mit einem Silikatfüllstoff mit einem durchschnittlichen Partikeldurchmesser, der durch ein Laserbeugungsverfahren in Übereinstimmung mit JIS Z8826 gemessen wird, in einem Bereich von 5,0 µm bis 8,0 µm und einem durchschnittlichen spezifischen Oberflächenbereich, der durch ein Stickstofifabsorptionsverfahren in Übereinstimmung mit JIS K6217 gemessen wird, in einem Bereich von 8,0 m²/g bis 15,0 m²/g erhalten ist, auf eine Oberfläche des elektromagnetischen Stahlblechs, wobei ein Gehalt des Silikatfüllstoffs 1 bis 40 Massenanteile in Bezug auf 100 Massenanteile des Bindemittelfestkörpergehaltes beträgt, und
Härten und Trocknen des elektromagnetischen Stahlblechs bei einer Endpunkttemperatur im Bereich von 250° C bis 450° C für 5 bis 35 Sekunden,
wobei der Silikatfüllstoff ein plattenförmiger Monokristall oder Polykristall mit einer geschichteten Struktur ist.

9. Verfahren zum Herstellen eines elektromagnetischen Stahlblechs mit einer Isolierbeschichtung nach Anspruch 8, wobei
der Bindemittelfestkörpergehalt ferner ein organisches Harz mit einem durchschnittlichen Partikeldurchmesser, der durch ein Laserbeugungsverfahren in Übereinstimmung mit JIS Z8826 gemessen wird, in einem Bereich von 0,05 µm bis 0,50 µm umfasst, wobei ein Gehalt des organischen Harzes 1 bis 50 Massenanteile in Bezug auf 100 Massenanteile des Metallphosphates beträgt, und
das organische Harz eines von einer Mischung oder einem Copolymer aus einem acrylbasierten Harz, einem epoxidbasierten Harz und einem Polyesterharz ist.

10. Verfahren zum Herstellen eines elektromagnetischen Stahlblechs nach Anspruch 8 oder 9, wobei
ein nicht ausgerichtetes elektromagnetisches Stahlblech als das elektromagnetische Stahlblech verwendet wird.

11. Verfahren zum Herstellen eines elektromagnetischen Stahlblechs nach Anspruch 8 oder 9, wobei
eine Beschichtungsdicke der Isolierbeschichtung nach dem Härten und Trocknen in einem Bereich von 2,5 µm bis 12 µm liegt und größer als der durchschnittliche Partikeldurchmesser des Silikatfüllstoffs ist.

12. Verfahren zum Herstellen eines elektromagnetischen Stahlblechs mit einer Isolierbeschichtung, wobei das Verfahren umfasst:
Auftragen einer gemischten Lösung, die durch Mischen einer Bindemittellösung, die ein kolloidales Silikat umfasst, mit einem organischen Harz mit einem durchschnittlichen Partikeldurchmesser, der durch ein Laserbeugungsverfahren in Übereinstimmung mit JIS Z8826 gemessen wird, in einem Bereich von 0,05 pm bis 0,50 µm erhalten ist, auf das elektromagnetische Stahlblech, wobei ein Gehalt des organischen Harzes 40 bis 400 Massenanteile in Bezug auf 100 Massenanteile des kolloidalen Silikats beträgt, wobei ein Silikatfüllstoff einen durchschnittlichen Partikeldurchmesser, der durch ein Laserbeugungsverfahren in Übereinstimmung mit JIS Z8826 gemessen wird, in einem Bereich von 5,0 µm bis 8,0 µm und einen durchschnittlichen spezifischen Oberflächenbereich, der durch ein Stickstoffabsorptionsverfahren in Übereinstimmung mit JIS K6217 gemessen wird, in einem Bereich von 8,0 m²/g bis 15,0 m²/g aufweist, wobei ein Gehalt des Silikatfüllstoffs 1 bis 40 Massenanteile in Bezug auf 100 Massenanteile des Bindemittelfestkörpergehalts beträgt, und
Härten und Trocknen des elektromagnetischen Stahlblechs bei einer Endpunkttemperatur in dem Bereich von 200° C bis 400° C für 5 bis 25 Sekunden, wobei
das organische Harz eines von einer Mischung aus oder einem Copolymer aus einem acrylbasierten Harz, einem epoxidbasierten Harz und einem Polyesterharz ist, und
der Silikatfüllstoff ein plattenförmiger Monokristall oder Polykristall mit einer geschichteten Struktur ist.

13. Verfahren zum Herstellen eines elektromagnetischen Stahlblechs nach Anspruch 12, wobei
ein nicht ausgerichtetes elektromagnetisches Stahlblech als das elektromagnetische Stahlblech verwendet wird.

14. Verfahren zum Herstellen eines elektromagnetischen Stahlblechs nach Anspruch 12, wobei
eine Beschichtungsdicke der Isolierbeschichtung nach dem Härten und Trocknen in einem Bereich von 2,5 µm bis 12 µm liegt und größer als der durchschnittliche Partikeldurchmesser des Silikatfüllstoffs ist.

## Revendications

1. Tôle d'acier électromagnétique ayant un revêtement isolant sur une surface de la tôle d'acier électromagnétique, le revêtement isolant incluant :
une teneur en solide de liant contenant un phosphate métallique ; et
une charge de silicate ayant un diamètre de particule moyen mesuré par un procédé de diffraction laser selon JIS Z8826 dans une plage de 5,0 µm à 8,0 µm et une surface spécifique moyenne mesurée par un procédé d'absorption d'azote selon JIS K6217 dans une plage de 8,0 m²/g à 15,0 m²/g, une teneur de la charge de silicate étant 1 à 40 parties en masse pour 100 parties en masse de la teneur en solide de liant,
où la charge de silicate est un monocristal ou polycristal analogue à une plaquette ayant une structure feuilletée.

2. Tôle d'acier électromagnétique selon la revendication 1, où :
la teneur en solide de liant contient en outre une résine organique ayant un diamètre de particule moyen mesuré par un procédé de diffraction laser selon JIS Z8826 dans une plage de 0,05 µm à 0,50 µm, une teneur de la résine organique étant 1 à 50 parties en masse pour 100 parties en masse du phosphate métallique ; et
la résine organique est l'une de, un mélange de, ou un copolymère d'une résine à base acrylique, d'une résine à base époxy et d'une résine de polyester.

3. Tôle d'acier électromagnétique selon la revendication 1 ou 2, où
la tôle d'acier électromagnétique est une tôle d'acier électromagnétique non orientée.

4. Tôle d'acier électromagnétique selon la revendication 1 ou 2, où
une épaisseur de revêtement du revêtement isolant est dans une plage de 2,5 µm à 12 µm, et est supérieure au diamètre de particule moyen de la charge de silicate.

5. Tôle d'acier électromagnétique ayant un revêtement isolant sur une surface de la tôle d'acier électromagnétique, le revêtement isolant incluant :
une teneur en solide de liant contenant de la silice colloïdale, et une résine organique ayant un diamètre de particule moyen mesuré par un procédé de diffraction laser selon JIS Z8826 dans une plage de 0,05 µm à 0,50 µm, une teneur de la résine organique étant 40 à 400 parties en masse pour 100 parties en masse de la silice colloïdale ; et
une charge de silicate ayant un diamètre de particule moyen mesuré par un procédé de diffraction laser selon JIS Z8826 dans une plage de 5,0 µm à 8,0 µm et une surface spécifique moyenne mesurée par un procédé d'absorption d'azote selon JIS K6217 dans une plage de 8,0 m²/g à 15,0 m²/g, une teneur de la charge de silicate étant 1 à 40 parties en masse pour 100 parties en masse de la teneur en solide de liant, où
la résine organique est l'une de, ou un mélange de, ou un copolymère d'une résine à base acrylique, d'une résine à base époxy et d'une résine de polyester, et
la charge de silicate est un monocristal ou polycristal analogue à une plaquette ayant une structure feuilletée.

6. Tôle d'acier électromagnétique selon la revendication 5, où
la tôle d'acier électromagnétique est une tôle d'acier électromagnétique non orientée.

7. Tôle d'acier électromagnétique selon la revendication 5, où
une épaisseur de revêtement du revêtement isolant est dans une plage de 2,5 µm à 12 µm, et est supérieure au diamètre de particule moyen de la charge de silicate.

8. Procédé de fabrication d'une tôle d'acier électromagnétique ayant un revêtement isolant, le procédé comprenant :
l'application, à une surface de la tôle d'acier électromagnétique, d'une solution mélangée obtenue par mélange d'une solution de liant contenant un phosphate métallique avec une charge de silicate ayant un diamètre de particule moyen mesuré par un procédé de diffraction laser selon JIS Z8826 dans une plage de 5,0 µm à 8,0 µm et une surface spécifique moyenne mesurée par un procédé d'absorption d'azote selon JIS K6217 dans une plage de 8,0 m²/g à 15 m²/g, une teneur de la charge de silicate étant 1 à 40 parties en masse pour 100 parties en masse de la teneur en solide de liant ; et
la cuisson et le séchage de la tôle d'acier électromagnétique à une température finale dans la plage de 250°C à 450°C pendant 5 à 35 secondes,
où la charge de silicate est un monocristal ou polycristal analogue à une plaquette ayant une structure feuilletée.

9. Procédé de fabrication d'une tôle d'acier électromagnétique ayant un revêtement isolant selon la revendication 8, où :
la solution de liant contient en outre une résine organique ayant un diamètre de particule moyen mesuré par un procédé de diffraction laser selon JIS Z8826 dans une plage de 0,05 µm à 0,50 µm, une teneur de la résine organique étant 1 à 50 parties en masse pour 100 parties en masse du phosphate métallique ; et
la résine organique est l'une de, un mélange de, ou un copolymère d'une résine à base acrylique, d'une résine à base époxy et d'une résine de polyester.

10. Procédé de fabrication d'une tôle électromagnétique selon la revendication 8 ou 9, où
une tôle d'acier électromagnétique non orientée est utilisée comme tôle d'acier électromagnétique.

11. Procédé de fabrication d'une tôle d'acier électromagnétique selon la revendication 8 ou 9, où
une épaisseur de revêtement du revêtement isolant après la cuisson et le séchage est dans une plage de 2,5 µm à 12 µm et est supérieure au diamètre de particule moyen de la charge de silicate.

12. Procédé de fabrication d'une tôle d'acier électromagnétique ayant un revêtement isolant, le procédé comprenant :
l'application, à la tôle d'acier électromagnétique, d'une solution mélangée obtenue par mélange d'une solution de liant contenant une silice colloïdale et une résine organique ayant un diamètre de particule moyen mesuré par un procédé de diffraction laser selon JIS Z8826 dans une plage de 0,05 µm à 0,50 µm, une teneur de la résine organique étant 40 à 400 parties en masse pour 100 parties en masse de la silice colloïdale, avec une charge de silicate ayant un diamètre de particule moyen mesuré par un procédé de diffraction laser selon JIS Z8826 dans une plage de 5,0 µm à 8,0 µm et une surface spécifique moyenne mesurée par un procédé d'absorption d'azote selon JIS K6217 dans une plage de 8,0 m²/g à 15,0 m²/g, une teneur de la charge de silicate étant 1 à 40 parties en masse pour 100 parties en masse de la teneur en solide de liant ; et
la cuisson et le séchage de la tôle d'acier électromagnétique à une température finale dans la plage de 200°C à 400°C pendant 5 à 25 secondes, où
la résine organique est l'une de, un mélange de, ou un copolymère d'une résine à base acrylique, d'une résine à base époxy et d'une résine de polyester, et
la charge de silicate est un monocristal ou polycristal analogue à une plaquette ayant une structure feuilletée.

13. Procédé de fabrication d'une tôle d'acier électromagnétique selon la revendication 12, où
une tôle d'acier électromagnétique non orientée est utilisée comme tôle d'acier électromagnétique.

14. Procédé de fabrication d'une tôle d'acier électromagnétique selon la revendication 12, où
une épaisseur de revêtement du revêtement isolant après la cuisson et le séchage est dans une plage de 2,5 µm à 12 µm, et est supérieure au diamètre de particule moyen de la charge de silicate.
